# EUROPÄISCHE PATENTSCHRIFT

(11) **EP 3 343 082 B1**
(45) Veröffentlichungstag und Bekanntmachung des Hinweises auf die Patenterteilung: **29.01.2020**
(21) Anmeldenummer: 17205351.4
(22) Anmeldetag: 05.12.2017
(51) Int. Cl.: F16L 3/08, F24D 3/14

(54) **FLÄCHENTEMPERIERUNGSSYSTEM**
SURFACE TEMPERING SYSTEM
SYSTÈME DE RÉGULATION DE TEMPÉRATURE DES SURFACES

(30) Priorität: 16.12.2016 DE 202016107044 U
(43) Veröffentlichungstag der Anmeldung: 04.07.2018
(73) Patentinhaber: REHAU AG + Co, 95111 Rehau (DE)
(72) Erfinder: Burkhardt, Oliver, 91080 Uttenreuth (DE); Beck, Thomas, 90513 Zirndorf (DE)

(56) Entgegenhaltungen:
- DE-U1- 29 708 455
- DE-U1-202010 009 133
- DE-U1-202010 009 431
- DE-U1-202010 011 520
- DE-U1-202014 104 324
- DE-U1-202015 100 914

## Beschreibung

Die vorliegende Erfindung betrifft ein Flächentemperierungssystem, das mindestens ein flexibles Kunststoffrohr, dessen Außenseite zumindest teilweise von einem ersten Element einer Klettverbindung ummantelt ist; eine Trägerfolie, wobei an einer Seite der Trägerfolie ein zweites Element der Klettverbindung angeordnet ist, so dass das/die flexible(n) Kunststoffrohr(e) lösbar unter Bildung der Klettverbindung an der Trägerfolie festlegbar ist/sind; und einen formstabilen, flächigen Träger, der als wärme- und trittschalldämmende Dämmstoffmatte mit einer Mehrzahl von Stabilisierungsnähten ausgebildet ist, umfasst.

Flächentemperierungssysteme und darin einsetzbare flexible Kunststoffrohre sind aus dem Stand der Technik bekannt. Derartige Flächentemperierungssysteme werden zum Heizen und Kühlen von Räumen eingesetzt, wobei in Fußböden, Wänden oder Decken verlegte, von einem Wärmeträgermedium durchströmte Rohrleitungen in einer Estrich-, Putz- oder Betonschicht in Fußböden, Wänden oder Decken eingegossen sind. Vor dem Vergießen mit Estrich sind die Rohrleitungen üblicherweise durch geeignete Schienen oder Halter auf Trägern fixiert. Zur einfacheren und schnelleren Verlegung ist es bekannt, die Rohrleitungen mittels einer Klettverbindung auf den Trägern festzulegen. Beispielsweise beschreibt die DE 20 2010 009 133 U1 ein Flächentemperierungssystem mit einer Klett-Faserplatte aus einem formstabilen flächigen Träger mit einer Dicke zwischen 2,5 mm und 7 mm, auf den eine gewebeverstärkte Folie aufgebracht ist, die ein erstes Element einer Klettvorrichtung bildet, und einem flexiblen Rohr, das zumindest teilweise mit einem zweiten Element der Klettvorrichtung ummantelt ist. Der formstabile, flächige Träger wird vor dem Aufbringen des flexiblen Kunststoffrohrs und dem Vergießen mit Estrich auf einer zusätzlich erforderlichen Dämmstoffschicht verlegt. Nachteilig an dem in der DE 20 2010 009 133 U1 beschriebenen Flächentemperierungssystem wird gesehen, dass der dünne formstabile flächige Träger die hohen Anforderungen an die Mindestwärmeleitwiderstände von Dämmstoffmaterialien unter Flächentemperierungssystemen, wie sie in der EN 1264 normiert sind, nicht erfüllt. Hierzu ist zusätzlich eine bauseitig verlegte Dämmstoffschicht erforderlich, was einen weiteren kostenintensiven Arbeitsschritt bei der Installation der Flächentemperierungssysteme erforderlich macht.

Zur Lösung dieses Problems schlägt die DE 20 2015 100 914 U1 einen formstabilen, flächigen Träger vor, der als Dämmstoffschicht ausgebildet ist, wobei die ein Element der Klettverbindung tragende Trägerfolie an die Dämmschicht geheftet oder mit der Dämmschicht vernäht, verdrillt oder verflochten ist. Nachteilig daran wird angesehen, dass durch die Befestigung der Trägerfolie an der Dämmschicht mittels Anheften, Vernähen, Verdrillen oder Verflechten die Trägerfolie perforiert wird. Durch die mechanische Belastung auf der Baustelle einerseits sowie durch die Rückstellkräfte der flexiblen Kunststoffrohre andererseits besteht die Gefahr, dass die durch die Nähte verursachten Löcher in der Trägerfolie noch vergrößert werden. Die Funktion der Trägerfolie als flüssigkeitsdichte Schutzschicht ist dadurch beeinträchtigt. Beispielsweise kann Estrichanmachwasser in die Dämmstoffschicht eindringen, Feuchteschäden verursachen und die Funktion als Wärme- und Trittschalldämmung negativ beeinflussen. Faserdämmstoffe sind hier aufgrund ihrer Struktur besonders gefährdet.

An dieser Stelle setzt die vorliegende Erfindung ein, deren Aufgabe darin liegt, ein Flächentemperierungssystem zur Verfügung zu stellen, das die Nachteile des Stands der Technik überwindet. Insbesondere soll das erfindungsgemäße Flächentemperierungssystem feuchtigkeitsdicht sein. Darüber hinaus soll das erfindungsgemäße Flächentemperierungssystem einen einfachen Aufbau aufweisen und leicht verlegbar sein.

Diese und andere Aufgaben werden durch ein Flächentemperierungssystem mit den Merkmalen des Anspruchs 1 gelöst. Bevorzugte Ausführungsformen des erfindungsgemäßen Flächentemperierungssystems sind in den abhängigen Ansprüchen beschrieben.

Gemäß der vorliegenden Erfindung wurde erkannt, dass die Gefahr des Eindringens von Wasser, insbesondere von Estrichanmachwasser, in das Dämmmaterial der Dämmstoffschicht dadurch beseitigt werden kann, dass die Trägerfolie in anderer Weise auf eine Seite der Dämmstoffmatte aufgebracht ist, ohne die Trägerfolie mit der Dämmstoffmatte zu vernähen, also beispielsweise durch Aufkleben oder Aufkaschieren. Das Aufkleben oder Aufkaschieren der Trägerfolie kann dabei vollflächig, streifenförmig, punktuell oder in einer Kombination der genannten Geometrien erfolgen. Dadurch wird die Trägerfolie nicht perforiert, so dass keine Löcher vorhanden sind, die ein Eindringen von Wasser in das Dämmmaterial erlauben würden. Durch die Trägerfolie bleibt das Dämmmaterial der Dämmstoffschicht vor Wasser geschützt, so dass diesem seine wärme- und trittschalldämmendenden Eigenschaften erhalten bleiben. Zusätzlich weist die Dämmstoffmatte eine Mehrzahl von Stabilisierungsnähten auf, durch die die Dämmstoffmatte einen kompakten Verbundkörper darstellt, der sich zum Einsatz als formstabiler, flächiger Träger eines Flächentemperierungssystems eignet.

Dementsprechend liegt die vorliegende Erfindung in der Bereitstellung eines Flächentemperierungssystems, das mindestens ein flexibles Kunststoffrohr, dessen Außenseite zumindest teilweise von einem ersten Element einer Klettverbindung ummantelt ist; eine Trägerfolie, wobei an einer Seite der Trägerfolie ein zweites Element der Klettverbindung angeordnet ist, so dass das/die flexible(n) Kunststoffrohr(e) lösbar unter Bildung der Klettverbindung an der Trägerfolie festlegbar ist/sind; und einen formstabilen, flächigen Träger, der als wärme- und trittschalldämmende Dämmstoffmatte mit einer Mehrzahl von Stabilisierungsnähten ausgebildet ist, umfasst, wobei die Trägerfolie auf einer Seite der wärme- und trittschalldämmende Dämmstoffmatte festgelegt ist, ohne dass die Stabilisierungsnähte die Trägerfolie durchdringen.

Wie er hierin verwendet wird, bedeutet der Begriff "Kunststoffrohr" ein Vollkunststoffrohr oder ein Metall-Kunststoff-Verbundrohr. In Bezug auf das erfindungsgemäßen Kunststoffrohr wird der Begriff "flexibel" hierin so verwendet, dass das flexible Kunststoffrohr Biegeradien ermöglicht, die zur Verlegung eines Rohres für ein Flächentemperierungssystem erforderlich sind.

Hinsichtlich des erfindungsgemäßen Flächentemperierungssystems ist es bevorzugt, wenn die Dämmstoffmatte ein Fasermaterial, insbesondere Mineralwolle, Glaswolle, Sisal, tierische Wollen und Haare, Kokos, Heu, Getreidestroh, Hanf, Steinwolle, Holzwolle, Holzwollverbundprodukte, Bambusfasern oder einen Verbund oder Mehrlagenverbund der genannten Materialien, umfasst.

Darüber hinaus kann es von Nutzen sein, wenn zumindest mehrere der Stabilisierungsnähte die gesamte Materialstärke der wärme- und trittschalldämmenden Dämmstoffmatte durchsetzen. Dadurch verlaufen die Verbindungsnähte auf beiden Seiten der Dämmstoffmatte, was die Kompaktheit des resultierenden Verbundkörpers weiter erhöht und zu dessen Stabilität beiträgt. Darüber hinaus ist das Risiko verringert, dass die Stabilisierungsnähte bei einwirkender Belastung aus der Dämmstoffmatte herausgerissen werden.

Ebenso kann er hilfreich sein, wenn die Stabilisierungsnähte als Fäden, Bänder, insbesondere gurtartige Bänder, bevorzugt mit einer Breite von etwa 3 mm bis 5 mm, oder Draht, insbesondere dünne Drahtfäden, ausgebildet sind. Derartige Stabilisierungsnähte haben sich in der Praxis als besonders geeignet erwiesen.

Ebenso kann er hilfreich sein, wenn die Stabilisierungsnähte in der Form eines Doppelkettenstiches in die Dämmstoffmatte eingreifen. Dies macht die resultierende Dämmstoffmatte noch kompakter.

Ebenso kann es hilfreich sein, wenn durch die Stabilisierungsnähte eine Deckschicht auf eine Seite der Dämmstoffmatte aufgenäht ist. Dabei ist es besonders günstig, wenn die Deckschicht durch die Stabilisierungsnähte auf die Seite der Dämmstoffmatte aufgebracht ist, auf der dann die ein Element der Klettverbindung tragende Trägerfolie aufgebracht, insbesondere aufgeklebt, ist. Die aufgenähte Deckschicht kann aus einem Kunststoff, aus einem nachwachsendem Rohstoff, aus einem mineralischen Rohstoff, aus Textil, Papier, Glasvlies, Aluminium, etc. oder aus einem Verbundmaterial aus den genannten Werkstoffen bestehen. Alternativ kann die aufgenähte Deckschicht auch ein Gittergewebe sein. Bevorzugt ist die Deckschicht jedoch eine Kunststofffolie, besonders bevorzugt eine Kunststofffolie mit einem niedrigen Dampfdiffusionswiderstand.

Die Dämmstoffmatte kann als Einzelplatte, als Faltplatte oder auch als Rollenware ausgebildet sein.

Zur Verbindung zweier formstabiler, flächiger Träger eines erfindungsgemäßen Flächentemperierungssystems kann die Deckschicht und/oder die Trägerfolie wenigstens an einer Seite über den Rand der Dämmstoffmatte hinausragen. Die resultierenden Überlappungsstreifen, die bevorzugt über selbstklebende Eigenschaften verfügen, überlappen beim Verlegen eine benachbarte Dämmstoffmatte. Dadurch wird sehr einfach eine gegenüber Wasser undurchlässige Abdeckschicht für den aufzubringenden Estrich (angelehnt an die DIN 18560) oder Gussasphalt erzeugt.

Ebenso kann er hilfreich sein, wenn an der der Trägerfolie gegenüberliegenden Seite der Dämmstoffmatte eine untere Deckschicht angeordnet ist, die vorzugsweise ebenfalls an die Dämmstoffmatte angenäht ist. Dadurch wird die Gefahr, dass sich die Stabilisierungsnähte aus dem Material der Dämmstoffmatte heraustrennen weiter verringert. Die untere Deckschicht ist vorzugsweise als Verbundfolie ausgebildet, die besonders bevorzugt eine Metallschicht, vorzugsweise eine Aluminiumschicht, umfasst. Durch einen derartigen Aufbau lassen sich die isolierenden Eigenschaften des formstabilen, flächigen Trägers weiter erhöhen. Dabei ist es besonders hilfreich, wenn die untere Deckschicht neben der Metallschicht eine Trägerschicht, vorzugsweise aus Papier, und/oder eine Schutzschicht, vorzugsweise aus Polymermaterial, insbesondere Polyethylen oder Polypropylen, umfasst. Alternativ kann die untere Deckschicht auch aus einem Kunststoff, aus einem nachwachsendem Rohstoff, aus einem mineralischen Rohstoff, aus Textil, Papier, Glasvlies, Aluminium, etc. oder aus einem Verbundmaterial aus den genannten Werkstoffen bestehen oder auch ein Gittergewebe sein.

Hinsichtlich der Trägerfolie es weiter bevorzugt, wenn die Trägerfolie als Verbundfolie ausgebildet ist, die insbesondere an ihrer dem formstabilen, flächigen Trägern zugewandten Seite eine Metallschicht, vorzugsweise eine Aluminiumschicht, umfasst. Dabei ist es besonders bevorzugt, wenn die Trägerfolie neben der Metallschicht eine Trägerschicht, vorzugsweise aus Papier, und eine Schutzschicht, vorzugsweise aus Polymermaterial, insbesondere Polyethylen oder Polypropylen, umfasst.

Die Trägerfolie ist bevorzugt flächig mit dem zweiten Element der Klettverbindung versehen, vorzugsweise ist die gesamte Fläche der Trägerfolie mit dem zweiten Element der Klettverbindung versehen. Die so gebildete flächige Klettverbindung ermöglicht eine Rohrverlegung auf der gesamten Fläche der Trägerfolie in einem nahezu beliebigen Verlegemuster. Die Trägerfolie ist bevorzugt flächig oder partiell auf die Dämmstoffmatte oder die Deckschicht aufgebracht, insbesondere aufgeklebt oder aufkaschiert. Die Anbindung der Trägerfolie kann dabei vollflächig oder mit Unterbrechungen erfolgen.

Hinsichtlich des flexiblen Kunststoffrohrs des erfindungsgemäßen Flächentemperierungssystems ist es bevorzugt, wenn das flexible Kunststoffrohr zwischen einer ersten Schicht aus polymerem Material, die ein Lumen des Kunststoffrohres umgibt, und dem ersten Element der Klettverbindung eine flexible, elastische Ummantelung umfasst. Beim Verlegen des flexiblen Kunststoffrohrs auf dem mit der Trägerfolie versehenen formstabilen flächigen Träger passt sich die flexible, elastische Ummantelung aufgrund ihrer Elastitzität an die Oberfläche der Trägerfolie an, wenn auf das flexible Kunststoffrohr von außen Druck ausgeübt wird, beispielsweise indem der Verleger mit dem Fuß auf das erfindungsgemäße flexible Kunststoffrohr steigt oder mit der darauf drückt oder darüber streicht. Dadurch wird die Kontaktfläche zwischen dem flexiblen Kunststoffrohr und der Trägerfolie vergrößert, was zu einer stärker ausgebildeten Klettverbindung führt. Nach Wegfall des Drucks auf das flexible Kunststoffrohr bleibt diese Kontaktfläche aufgrund der Klettverbindung im Wesentlichen unverändert. Darüber hinaus kann das flexible Kunststoffrohr beliebig auf dem mit der Trägerfolie versehenen formstabilen flächigen Träger ohne festgelegte Verlegerichtung verlegt werden. Zur Korrektur der Verlegung kann die Klettverbindung gelöst und das Rohr in der gewünschten Anordnung verlegt werden. Dies erlaubt so eine flexible Rohrverlegung, die sich an unterschiedliche Raumgeometrien anpassen lässt. Ein Aufschwimmen des erfindungsgemäßen flexiblen Kunststoffrohrs im frisch verlegten Estrich ist weitestgehend ausgeschlossen.

Bevorzugt handelt es sich bei dem polymeren Material der ersten Schicht des flexiblen Kunststoffrohrs um vernetztes Polyethylen (PE-X) oder PE-RT. Wie er hierin verwendet wird, bedeutet der Begriff "PE-RT" ein Polyethylen mit erhöhter Temperaturbeständigkeit gemäß ISO 24033. Eine erste Schicht aus PE-X ist aufgrund der thermischen und mechanischen Eigenschaften (wie Schlagzähigkeit, Knickfestigkeit, Punktlastbeständigkeit) bevorzugt. Wie hierin verwendet wird, bedeutet der Begriff "PE-X" vernetztes Polyethylen, wobei Peroxid-vernetztes Polyethylen (PE-Xa), Silan-vernetztes Polyethylen (PE-Xb), Elektronenstrahl-vernetztes Polyethylen (PE-Xc) sowie azovernetztes Polyethylen (PE-Xd) umfasst sind. Gemäß der vorliegenden Erfindung wird Peroxid-vernetztes Polyethylen (PE-Xa) als bevorzugtes polymeres Material der ersten Schicht eingesetzt. Die Vernetzung zum vernetzten Polyethylen erfolgt vorzugsweise wie in der DE 102 51 152 B4 beschrieben. Darüber hinaus kann das polymere Material der ersten Schicht weiter einen Haftvermittler (vorzugsweise ein funktionalisiertes Polyolefinen, insbesondere ein Maleinsäureanhydridgepfropftes LLDPE (lineares Polyethylen geringerer Dichte)) und/oder eine Diffusionssperrschicht, insbesondere aus Polyvinylakohol (PVA) oder Ethylen-Vinylalkohol-Copolymer (EVOH) umfassen.

Darüber hinaus kann es sich als günstig erweisen, wenn das erste Element der Klettverbindung spiralförmig oder doppelspiralförmig an der Außenseite des flexiblen Kunststoffrohrs angeordnet ist. Bei geringem Materialaufwand sorgt dies für eine dennoch hohe Häufigkeit der Kontaktstellen zwischen dem flexiblen Kunststoffrohr und dem Trägerfolie. Dabei hat es sich als materialeinsparend und damit kostengünstig erwiesen, wenn die flexible, elastische Ummantelung die erste Schicht aus polymerem Material teilweise ummantelt. Eine besonders effektive Variante hinsichtlich Materialaufwand für die flexible elastische Schicht und hoher Kontaktfläche zwischen dem flexiblen Kunststoffrohr und der Trägerfolie liegt in diesem Zusammenhang insbesondere dann vor, wenn die flexible, elastische Ummantelung an der der ersten Schicht zugewandten Seite des ersten Elements der Klettverbindung angeordnet ist und dem Verlauf des ersten Elements der Klettverbindung an der Außenseite des flexiblen Kunststoffrohrs folgt.

Die flexible, elastische Ummantelung kann die erste Schicht des flexiblen Kunststoffrohrs auch vollständig ummantelt. Dazu kann die flexible, elastische Ummantelung im Rahmen einer Coextrusion unmittelbar oder unter Einsatz einer Haftvermittlerschicht auf die erste Schicht aufgebracht werden. Eine bevorzugte einfache Verbindung zwischen der flexiblen, elastischen Ummantelung sowie der ersten Schicht und/oder dem ersten Element der Klettverbindung erfolgt über eine Klebstoffschicht. Die flexible, elastische Ummantelung kann aus einem flexiblen Material, wie einem geschäumten Kunststoff (z.B. ein geschäumtes Polyethylen oder Polyurethan) hergestellt sein. Die flexible, elastische Ummantelung gibt dann bei Einwirkung eines äußeren Drucks aufgrund ihrer Flexibilität nach und ermöglicht auf diese Weise beim Aufdrücken des Kunststoffrohres auf die Trägerfolie die Ausbildung einer vergrößerten Auflagefläche und somit einer stärkeren Klettverbindung zwischen erfindungsgemäßem Kunststoffrohr und Trägerfolie.

Gemäß einer Ausführungsform der vorliegenden Erfindung wird ein Element der Klettverbindung durch Haken, Schlingen und/oder Fasern gebildet, die in ein Gewirke, ein Vlies, ein Veloursgewebe oder dergleichen des anderen Elements der Klettverbindung lösbar eingreifen können. Die Klettverbindung gewährleistet so eine lösbare Verbindung zwischen der Trägerfolie und dem flexiblen Kunststoffrohr, wodurch das flexible Kunststoffrohr auf der Trägerfolie reversibel festgelegt wird. Dabei ist es bevorzugt, wenn das erste Element der Klettverbindung die Haken, Schlingen und/oder Fasern aufweist, während das zweite Element der Klettverbindung durch das Gewirke, das Vlies, das Veloursgewebe oder ein Plüsch-, Frottee- oder sonstiges textiles Flächengebilde gebildet wird. Umgekehrt ist auch möglich, dass das erste Element der Klettverbindung durch das Gewirke, das Vlies, das Veloursgewebe, das Plüsch-, Frottee- oder sonstiges textiles Flächengebilde gebildet wird, während das zweite Element der Klettverbindung die Haken, Schlingen und/oder Fasern aufweist.

Das erfindungsgemäße Flächentemperierungssystem sowie einzelne Teile davon können auch zeilenweise oder schichtweise unter Verwendung eines zeilenaufbauenden oder schichtaufbauenden Fertigungsverfahrens (z. B. 3D-Druck) hergestellt werden.

Im Folgenden soll die vorliegende Erfindung unter Bezugnahme auf die in den Figuren dargestellten Ausführungsformen im Detail erläutert werden. Insoweit sich Teile oder Bauelemente in ihrer Funktion entsprechen, wird deren Beschreibung nicht in jeder der folgenden Figuren wiederholt. Es zeigen:
Fig. 1 eine Querschnittsdarstellung eines Flächentemperierungssystems gemäß einer Ausführungsform der vorliegenden Erfindung;
Fig. 2 eine Querschnittsdarstellung eines Flächentemperierungssystems gemäß einer Ausführungsform der vorliegenden Erfindung; und
Fig. 3 eine Querschnittsdarstellung eines Flächentemperierungssystems gemäß einer weiteren Ausführungsform der vorliegenden Erfindung.

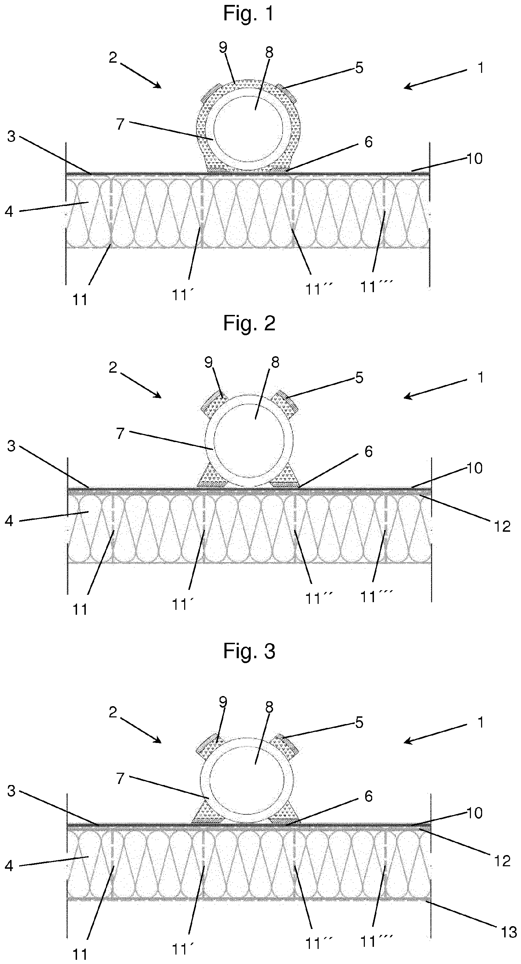

In Fig. 1 ist eine Ausführungsform eines Flächentemperierungssystems 1 gemäß der vorliegenden Erfindung in einer Querschnittsdarstellung gezeigt. Das erfindungsgemäße Flächentemperierungssystem 1 gemäß dieser Ausführungsform umfasst ein flexibles Kunststoffrohr 2, eine Trägerfolie 3 sowie einen formstabilen, flächigen Träger 4.

Die Außenseite des flexiblen Kunststoffrohrs 2 ist in Form von Spiralen von einem ersten Element 5 einer Klettverbindung 6 gebildet. Das flexible Kunststoffrohr 2 umfasst eine erste Schicht 7 aus polymerem Material, die ein Lumen 8 zur Führung eines Wärmeträgermediums umgibt. In der in Fig.1 dargestellten Ausführungsform ist die erste Schicht 7 aus Peroxid-vernetztem Polyethylen (PE-Xa), um das herum in der angegeben Reihenfolge eine Haftvermittlerschicht und eine Diffusionssperrschicht angeordnet sind. Bevorzugt ist die erste Schicht 7 sauerstoffdicht gemäß DIN 4726. Die erste Schicht 7 wird vorzugsweise durch Coextrusion hergestellt. Die Außenseite des flexiblen Kunststoffrohres 2 bildet das erste Element 5 der Klettverbindung 6, das als Bänder ausgebildet ist, die in Form von im Wesentlichen parallel zueinander verlaufenden Spiralen um die erste Schicht 7 angeordnet sind. Damit ist die erste Schicht 7 von dem ersten Element 5 der Klettverbindung 6 teilweise ummantelt. Das erste Element 5 der Klettverbindung 6 umfasst Haken, Fasern oder ähnliches. Um die erste Schicht 7 des flexiblen Kunststoffrohres 2 herum ist über die gesamte Fläche mittels einer Haftvermittlerschicht und/oder einer Klebstoffverbindung eine weitere Schicht aus geschäumtem Polyethylen befestigt, die eine flexible elastische Ummantelung 9 darstellt. Die flexible elastische Ummantelung 9 ist wiederum über eine Klebstoffverbindung mit dem ersten Element 5 der Klettverbindung 6 verbunden. In alternativen Ausführungsformen kann das flexible Kunststoffrohr 2 auch ohne die flexible elastische Ummantelung 9 ausgebildet sein.

Das flexible Kunststoffrohr 2 ist darin auf die Trägerfolie 3 aufgebracht, die vollflächig auf den formstabilen flächigen Träger 4 aufgeklebt ist. In alternativen Ausführungsformen der vorliegenden Erfindung kann die Trägerfolie 3 auch streifenförmig, punktuell oder in einer Kombination der genannten Geometrien aufgebracht sein. An ihrer dem flexiblen Kunststoffrohr 2 zugewandten Seite umfasst die Trägerfolie 3, ein zweites Element 10 der Klettverbindung 6, das als Gewirke ausgebildet ist, alternativ auch als Vlies, Veloursgewebe, Plüsch-, Frottee- oder sonstiges textiles Flächengebilde ausgebildet sein kann. Das flexible Kunststoffrohr 2, an dessen Außenseite sich das erste Element 5 der Klettverbindung 6 befindet, ist auf das zweite Element 10 lösbar unter Ausbildung der Klettverbindung 6 an der Trägerfolie 3 festgelegt.

Die Trägerfolie 3 umfasst eine Folie oder eine Verbundfolie, auf die das zweite Element 10 der Klettverbindung 6 aufgeklebt oder aufkaschiert ist. Die Trägerfolie 3 umfasst in dieser Ausführungsform eine insbesondere als Polymerschicht, vorzugsweise als Polyethylenschicht ausgebildete Trägerschicht, die über eine Klebstoffschicht wiederum mit einer Papierträgerschicht verbunden ist. Daran schließt sich eine Aluminiumfolie sowie eine ebenfalls als Polymerschicht, insbesondere als Polyethylenschicht ausgebildete Schutzschicht an. In anderen Ausführungsformen kann die Trägerfolie 3 als eine einschichtige Folie, insbesondere als Polymerfolie, vorzugsweise als Polyethylenfolie ausgebildet sein.

An ihrer dem flexiblen Kunststoffrohr 2 abgewandten Seite ist die Trägerfolie 3 vollflächig oder partiell auf den formstabilen, flächigen Träger 4 aufgeklebt, der als Dämmstoffmatte 4 ausgebildet ist. Die Dämmstoffmatte 4 ist vorzugsweise aus Mineralwolle oder einem anderen Fasermaterial hergestellt und dient zur Wärme- und Trittschalldämmenung. Die Dämmstoffmatte 4 ist über ihre gesamte Materialdicke von einer Mehrzahl von Stabilisierungsnähten 11, 11', 11", 11'" durchzogen. Die Stabilisierungsnähte 11, 11', 11", 11'" stabilisieren die innere Struktur der Dämmstoffmatte 4, so dass sie einen kompakten Verbundkörper bildet. Durch das vollständige Durchdringen der gesamten Materialdicke der Dämmstoffmatte 4 verlaufen die Verbindungsnähte auf beiden Seiten der Dämmstoffmatte, was die Kompaktheit des resultierenden Verbundkörpers weiter erhöht und zu dessen Stabilität beiträgt. Darüber hinaus verletzen die Stabilisierungsnähte 11, 11', 11", 11'" die Trägerfolie 3 nicht. Diese wird nicht perforiert, so dass die Funktion der Trägerfolie 3 als flüssigkeitsdichte Schutzschicht insbesondere gegen das Eindringen von Estrichanmachwasser oder von Fließestrich selbst in die darunterliegende Dämmschicht gegeben ist.

Zum Verlegen eines als Fußbodenheizung ausgebildeten erfindungsgemäßen Flächentemperierungselements 1 wird der mit der Trägerfolie 3 versehene formstabile, flächige Träger 4 zunächst auf dem Boden oder einer Zusatzdämmung vollflächig ggf. nach vorherigem Zuschneiden ausgelegt. Die Stöße zweier benachbarter formstabiler, flächiger Träger 4 werden vorzugsweise mit Randdämmstreifen untereinander flüssigkeitsdicht verklebt, insbesondere durch Überlappungsstreifen, die vorzugsweise als selbstklebend ausgeführt sind. Daraufhin wird das flexible Kunststoffrohr 2 im gewünschten Muster auf der Trägerfolie 3 verlegt und angedrückt, so dass die Klettverbindung 6 ausgebildet wird. Zur Korrektur des Verlegemusters kann die reversibel ausgebildete Klettverbindung 6 durch Anheben des flexiblen Kunststoffrohrs 2 von der Trägerfolie 3 gelöst und in einem geänderten Verlegemuster wieder auf diese aufgebracht werden. Abschließend wird die Anordnung mit Estrich vergossen.

In Fig. 2 und Fig. 3 sind weitere Ausführungsformen des erfindungsgemäßen Flächentemperierungssystems 1 anhand von Querschnittsdarstellungen gezeigt. Um Wiederholungen zu vermeiden, werden daher im Folgenden nur Unterschiede zu der in Fig. 1 dargestellten Ausführungsform des erfindungsgemäßen Flächentemperierungssystems 1 beschrieben. Die Ausführungsformen zu Fig. 1 gelten auch für die Ausführungsformen gemäß Fig. 2 und Fig. 3 entsprechend. Gleiche Elemente sind in den Abbildungen durch identische Bezugszeichen gekennzeichnet.

In Fig. 2 ist eine weitere Ausführungsform eines Flächentemperierungssystems 1 gemäß der vorliegenden Erfindung in einer Querschnittsdarstellung gezeigt Ein Unterschied dieser weiteren Ausführungsform zu der in Fig. 1 gezeigten Ausführungsform liegt in der Art des flexiblen Kunststoffrohrs 2. In dieser Ausführungsform eines Flächentemperierungssystems 1. Die Außenseite des flexiblen Kunststoffrohrs 2 ist wiederum in Form von Spiralen von einem ersten Element 5 einer Klettverbindung 6 gebildet. An der dem ersten Element 5 der Klettverbindung 6 abgewandten Seite der zweiten Schicht 4 ist über die gesamte Fläche mittels einer Klebstoffverbindung eine Schicht aus geschäumtem Polyethylen angeordnet. Diese flexible elastische Ummantelung 9 ummantelt die erste Schicht 7 somit ebenfalls in der Form von im Wesentlichen parallel zueinander verlaufenden Spiralen, deren Verlauf jeweils dem Verlauf der Spiralen des ersten Elements 5 der Klettverbindung 6 entspricht. Die flexible elastische Ummantelung 9 ist wiederum über eine Klebstoffverbindung mit der ersten Schicht 8 des Kunststoffrohres 2 verbunden. In der in Fig.2 dargestellten Ausführungsform ist die erste Schicht 8 aus einem Polyethylen mit erhöhter Temperaturbeständigkeit gemäß ISO 24033 (PE-RT) extrudiert.

Darüber hinaus ist durch die Stabilisierungsnähte 11, 11', 11", 11'" eine Deckschicht 12 auf der Seite der Dämmstoffmatte 4 aufgenäht, die das zweite Element 10 der Klettverbindung 6 trägt. Die aufgenähte Deckschicht 12 ist in der in Fig. 2 dargestellten Ausführungsform als ein Gittergewebe ausgebildet. Die Deckschicht 12 verhindert ein Herauslösen der Stabilisierungsnähte 11, 11', 11", 11'" aus der Dämmmatte 4 unter hoher Belastung. Alternativ kann die Deckschicht 11 auch als eine Schicht aus einem Kunststoff, aus einem nachwachsendem Rohstoff, aus einem mineralischen Rohstoff, aus Textil, Papier, Glasvlies, Aluminium, etc. oder aus einem Verbundmaterial aus den genannten Werkstoffen ausgebildet sein.

Eine weitere Ausführungsform eines Flächentemperierungssystems 1 gemäß der vorliegenden Erfindung ist in Fig. 3 wiederum in einer Querschnittsdarstellung gezeigt. Ein Unterschied dieser weiteren Ausführungsform zu der in Fig. 1 gezeigten Ausführungsform liegt auch gemäß dieser Ausführungsform in dem flexiblen Kunststoffrohr 2, das in der Ausführungsform gemäß Fig. 3 identisch zu dem flexiblen Kunststoffrohr 2 in Fig. 2 ausgestaltet ist. Darüber hinaus ist auch gemäß dieser Ausführungsform des Flächentemperierungssystems 1 durch die Stabilisierungsnähte 11, 11', 11", 11'" auf der Seite der Dämmstoffmatte 4, die das zweite Element 10 der Klettverbindung 6 trägt, eine Deckschicht 12 aufgenäht. Ferner ist auch an der dem flexiblen Kunststoffrohr 2 gegenüberliegenden Seite der Dämmstoffmatte 4 eine weitere Deckschicht 13 angeordnet, die ebenfalls durch die Stabilisierungsnähte 11, 11', 11", 11'" mit der Dämmstoffmatte 4 vernäht ist. Dadurch wird die Gefahr, dass sich die Stabilisierungsnähte 11, 11', 11", 11'" aus dem Material der Dämmstoffmatte 4 unter Belastung heraustrennen, noch stärker reduziert. Auch die untere Deckschicht 13 ist in der in Fig. 3 dargestellten Ausführungsform als Verbundfolie ausgestaltet, die eine Metallschicht, insbesondere eine Aluminiumschicht, sowie eine Polymerschicht, insbesondere eine Polyethylenschicht, als Schutzschicht umfasst. In alternativen Ausführungsformen kann die untere Deckschicht 13 auch als eine Schicht aus einem Kunststoff, aus einem nachwachsendem Rohstoff, aus einem mineralischen Rohstoff, aus Textil, Papier, Glasvlies, Aluminium, etc. oder aus einem Verbundmaterial aus den genannten Werkstoffen bestehen oder auch als ein Gittergewebe ausgebildet sein.

Das Verlegen eines als Fußbodenheizung ausgebildeten erfindungsgemäßen Flächentemperierungselements 1 erfolgt in der in Bezug auf die Fig. 1 erläuterten Art und Weise.

Die vorliegende Erfindung wurde unter Bezugnahme auf die in den Figuren gezeigte Ausführungsform der vorliegenden Erfindung im Detail beschrieben. Es versteht sich, dass die vorliegende Erfindung nicht auf die gezeigte Ausführungsform beschränkt ist, sondern sich der Umfang der vorliegenden Erfindung aus den beiliegenden Ansprüchen ergibt.

## Patentansprüche

1. Flächentemperierungssystem (1), umfassend:
- mindestens ein flexibles Kunststoffrohr (2), dessen Außenseite zumindest teilweise von einem ersten Element (5) einer Klettverbindung (6) ummantelt ist;
- eine Trägerfolie (3), wobei an einer Seite der Trägerfolie (3) ein zweites Element (10) der Klettverbindung (6) angeordnet ist, so dass das/die flexible(n) Kunststoffrohr(e) (2) lösbar unter Bildung der Klettverbindung (6) an der Trägerfolie (3) festlegbar ist/sind; und
- einen formstabilen, flächigen Träger (4), der als wärme- und trittschalldämmende Dämmstoffmatte (4) mit einer Mehrzahl von Stabilisierungsnähten (11, 11', 11", 11"') ausgebildet ist;
**dadurch gekennzeichnet, dass**
die Trägerfolie (3) auf einer Seite der wärme- und trittschalldämmenden Dämmstoffmatte (4) festgelegt ist, ohne dass die Stabilisierungsnähte (11, 11', 11", 11'") die Trägerfolie (3) durchdringen.

2. Flächentemperierungssystem (1) nach Anspruch 1, **dadurch gekennzeichnet, dass** die Dämmstoffmatte (4) ein Fasermaterial, insbesondere Mineralwolle, Glasfaser, Sisal, tierische Wollen und Haare, Kokos, Heu, Getreidestroh, Hanf, Steinwolle, Holzwolle, Holzwollverbundprodukte, Bambusfasern oder einen Verbund oder Mehrlagenverbund der genannten Materialien, umfasst.

3. Flächentemperierungssystem (1) nach Anspruch 1 oder Anspruch 2, **dadurch gekennzeichnet, dass** zumindest mehrere der Stabilisierungsnähte (11, 11', 11", 11'") die gesamte Materialstärke der wärme- und trittschalldämmende Dämmstoffmatte (4) durchsetzen.

4. Flächentemperierungssystem (1) nach einem Ansprüche 1 bis 3, **dadurch gekennzeichnet, dass** die Stabilisierungsnähte (11, 11', 11", 11'") als Fäden, Bänder oder Draht ausgebildet sind.

5. Flächentemperierungssystem (1) nach einem der Ansprüche 1 bis 4, **dadurch gekennzeichnet, dass** die Stabilisierungsnähte (11, 11', 11", 11"') in der Form eines Doppelkettenstiches in die Dämmstoffmatte (4) eingreifen.

6. Flächentemperierungssystem (1) nach einem der Ansprüche 1 bis 5, **dadurch gekennzeichnet, dass** durch die Stabilisierungsnähte (11, 11', 11", 11"') eine mindestens eine Deckschicht (12, 13) auf eine Seite der Dämmstoffmatte (4) aufgebracht ist.

## Claims

1. A surface temperature control system (1), comprising:
- at least one flexible plastic tube (2), the outer side of which is at least partly surrounded by a first element (5) of a hook-and-loop connection (6);
- a carrier sheet (3), wherein a second element (10) of the hook-and-loop connection (6) is arranged on one side of the carrier sheet (3) so that the flexible plastic tube(s) (2) can be releasably attached to the carrier sheet (3) by forming the hook-and-loop connection (6); and
- a dimensionally stable, flat carrier (4), which is configured as a heat- and impact-sound-insulating insulation mat (4) having a plurality of stabilising seams (11, 11', 11", 11"');
**characterised in that**
the carrier sheet (3) is secured on one side of the heat- and impact-sound-insulating insulation mat (4) without the stabilising seams (11, 11', 11", 11"') penetrating the carrier sheet (3).

2. The surface temperature control system (1) according to claim 1, **characterised in that** the insulation mat (4) comprises a fibrous material, in particular mineral wool, glass fibres, sisal, animal wool and hair, coconut, hay, cereal straw, hemp, rock wool, wood wool, wood wool composite products, bamboo fibres or a composite or multi-layer composite of the aforesaid materials.

3. The surface temperature control system (1) according to claim 1 or claim 2, **characterised in that** at least a plurality of the stabilising seams (11, 11', 11", 11"') pass through the entire material thickness of the heat- and impact-sound-insulating insulation mat (4).

4. The surface temperature control system (1) according to one of claims 1 to 3, **characterised in that** the stabilising seams (11, 11', 11", 11"') are configured as threads, tapes or wire.

5. The surface temperature control system (1) according to one of claims 1 to 4, **characterised in that** the stabilising seams (11, 11', 11", 11"') engage in the insulation mat (4) in the form of a double chain stitch.

6. The surface temperature control system (1) according to one of claims 1 to 5, **characterised in that** an at least one covering layer (12, 13) is applied on to one side of the insulation mat (4) by the stabilising seams (11, 11', 11", 11"').

## Revendications

1. Système de thermorégulation de surface (1) comprenant :
- au moins un tuyau en matière plastique (2) flexible, dont le côté extérieur est enveloppé au moins en partie d'un premier élément (5) d'une liaison agrippante (6) ;
- un film de support (3), dans lequel un deuxième élément (10) de la liaison agrippante (6) est disposé au niveau d'un côté du film de support (3) de telle sorte que le/les tuyaux en matière plastique (2) flexible/flexibles peut/peuvent être fixés de manière amovible en formant la liaison agrippante (6) au niveau du film de support (3) ; et
- un support (4) plat de forme stable, qui est réalisé sous la forme d'une natte en matière isolante à isolation thermique et insonorisante (4) avec une multitude de cordons de stabilisation (11, 11', 11", 11'") ;
**caractérisé en ce que**
le film de support (3) est fixé sur un côté de la natte en matière isolante (4) à isolation thermique et insonorisante sans que les cordons de stabilisation (11, 11', 11", 11'") ne traversent le film de support (3).

2. Système de thermorégulation de surface (1) selon la revendication 1, **caractérisé en ce que** la natte en matière isolante (4) comprend un matériau à base de fibres, en particulier de la laine minérale, des fibres de verre, du sisal, des laines et cheveux animaux, de la noix de coco, du foin, de la paille de céréales, du chanvre, de la laine de roche, de la laine de bois, des produits composites à base de laine de bois, des fibres de bambou ou un composite ou un composite multicouche desdits matériaux.

3. Système de thermorégulation de surface (1) selon la revendication 1 ou la revendication 2, **caractérisé en ce qu'**au moins plusieurs cordons de stabilisation (11, 11', 11", 11'") traversent la totalité de l'épaisseur de matériau de la natte en matière isolante (4) à isolation thermique et insonorisante.

4. Système de thermorégulation de surface (1) selon l'une quelconque des revendications 1 à 3, **caractérisé en ce que** les cordons de stabilisation (11, 11', 11", 11'") sont réalisés sous la forme de fils, de bandes ou de fil métallique.

5. Système de thermorégulation de surface (1) selon l'une quelconque des revendications 1 à 4, **caractérisé en ce que** les cordons de stabilisation (11, 11', 11", 11'") viennent en prise sous la forme d'un double point de chaîne avec la natte en matière isolante (4).

6. Système de thermorégulation de surface (1) selon l'une quelconque des revendications 1 à 5, **caractérisé en ce qu'**une couche de recouvrement (12, 13) au moins est appliquée sur un côté de la natte en matière isolante (4) par les cordons de stabilisation (11, 11', 11", 11'").
